# EUROPÄISCHE PATENTSCHRIFT

(11) **EP 2 953 111 B1**
(45) Veröffentlichungstag und Bekanntmachung des Hinweises auf die Patenterteilung: **19.12.2018**
(21) Anmeldenummer: 15000659.1
(22) Anmeldetag: 06.03.2015
(51) Int. Cl.: G08G 1/14, G08G 1/01, G01C 21/36

(54) **VERFAHREN UND VORRICHTUNG ZUR ERMITTLUNG FREIER ABSTELLPLÄTZE AUF LKW-PARKPLÄTZEN UND MITTEILUNG AN LKW-FAHRER**
METHOD AND DEVICE FOR DETERMINING FREE PARKING SPOTS IN HGV PARKING LOTS AND NOTIFICATION OF HGV DRIVERS
PROCÉDÉ ET DISPOSITIF DESTINÉS À DÉTERMINER DES AIRES DE STATIONNEMENT LIBRES SUR DES PARKINGS DE CAMIONS ET COMMUNICATION AU CONDUCTEUR DE CAMION

(30) Priorität: 06.06.2014 DE 102014008429
(43) Veröffentlichungstag der Anmeldung: 09.12.2015
(73) Patentinhaber: MAN Truck & Bus AG, 80995 München (DE)
(72) Erfinder: Zhou, Qing, 85757 Karlsfeld (DE); Zimmermann, Andreas, 80995 München (DE)
(74) Vertreter: Liebl, Thomas

(56) Entgegenhaltungen:
- EP-A1- 2 677 511
- EP-A2- 2 184 717
- WO-A1-2011/138035
- DE-A1-102006 017 845
- DE-A1-102012 201 472
- US-A1- 2011 063 132

## Beschreibung

Die Erfindung betrifft ein Verfahren und eine Vorrichtung zur Ermittlung freier Abstellplätze auf für LKWs (Lastkraftwagen) geeigneten Parkplätzen und eine Mitteilung dieser Information an LKW-Fahrer, insbesondere Parkplatz suchende LKW-Fahrer.

Es sind bereits Fahrerassistenzsysteme bekannt, mit denen mittels einer Sensorik bei einer Vorbeifahrt freie Parkplätze erkannt und einem Fahrer auf einer digitalen Karte angezeigt werden. Der Fahrer kann mittels GPS bei der Parkplatzsuche zurück zu einem freien Parkplatz geführt werden. Dieses bekannte System ist nur zur Ermittlung freier Parkplätze im unmittelbaren Umfeld eines Fahrzeugs geeignet.

Fahrer von größeren Nutzfahrzeugen sind verpflichtet, nach bestimmten Lenkzeiten Ruhezeiten mit Fahrtunterbrechungen einzulegen. Beispielsweise ist nach der Verordnung EG 561/2006 der Europäischen Gemeinschaft ein Fahrer eines Fahrzeugs mit einer zulässigen Höchstmasse einschließlich 3,5 t im gewerblichen Güter- oder Personenverkehr verpflichtet, spätestens nach 4,5 Stunden Lenkzeit eine Ruhezeit mit einer Fahrtunterbrechung von 45 Minuten einzulegen. Der Fahrer ist somit verpflichtet, vor Ablauf der maximal zulässigen Lenkzeit im Verlauf seiner Fahrtroute einen Parkplatz mit einem für ihn freien Abstellplatz ausfindig zu machen. Durch die große Anzahl von LKWs mit steigender Tendenz auf den Straßen kann trotz eines forcierten Parkplatzausbaus eine Parkplatzsuche zum Ende der zulässigen Lenkzeit für einen Fahrer mit mehreren nicht erfolgreichen Parkversuchen problematisch, aufwendig und stressig sein. Das eingangs beschriebene bekannte Fahrerassistenzsystem zur Parkplatzsuche ist für die vorstehende Parkplatzsuche mit LKWs ungeeignet.

Zudem ist ein Verfahren bekannt, mit dem in Echtzeit Verkehrsinformationen zum Verkehrsfluss einem Fahrer auf einer digitalisierten Straßenkarte angezeigt werden können: der Kartendienst von Google kann dazu Fortbewegungen von Fahrzeugen erfassen, in denen sich jeweils ein Android-Smartphone befindet, bei dem die GPS-Funktionen aktiviert sind und zusätzlich erlaubt wurde, dass Android diese Positionsdaten übermitteln darf. Das Android-Smartphone sendet anonymisiert die Positionsdaten an die Google-Server, welche daraus berechnen, wie schnell sich das zugeordnete Fahrzeug fortbewegt. Diese Informationen werden kann dann mit einer Vielzahl von Informationen aus anderen Android-Smartphones anderer Fahrzeuge abgeglichen, welche ebenfalls ihre Positionsdaten übermitteln. Daraus kann dann ein Abbild der Verkehrslage ermittelt und in einer digitalisierten Straßenkarte mit einem Farbcode angezeigt werden: beispielsweise ist der Verkehrsfluss in einer grün dargestellten Straße schnell und in einer rot dargestellten Straße langsam. Bei diesem Verfahren sind wenigstens ein zentraler Server sowie eine drahtlose, bidirektionale Kommunikationsverbindung zu einer Mehrzahl von Fahrzeugen eingesetzt - eine Verwendung für die Suche nach freien Abstellplätzen für LKWs ist damit weder möglich noch vorgesehen.

Aus der DE 10 2012 201 472 A1 ist weiter ein Verfahren bekannt, bei dem Parkinformationen zu freien Parkplätzen in zumindest einem Straßenzug bereitgestellt werden. Dabei werden zunächst Informationen über verfügbare, freie Parkplätze ermittelt und aus den ermittelten Informationen eine Wissensdatenbasis mit historischen Daten erzeugt, wobei die historischen Daten statistische Daten über freie Parkplätze umfassen. Aus den historischen Daten und aktuellen Informationen, welche zu einem ersten gegebenen Zeitpunkt für einen oder mehrere ausgewählte Straßenzüge ermittelt werden, wird dann eine Wahrscheinlichkeitsverteilung zu erwartender freier Parkplätze für den oder die ausgewählten Straßenzüge ermittelt, die mittels einer Visualisierung angezeigt wird.

Aufgabe der Erfindung ist es, ein gut funktionsfähiges Verfahren zur Ermittlung freier Abstellplätze auf für LKW geeigneten Parkplätzen in Verbindung mit einer Mitteilung an LKW-Fahrer vorzuschlagen.

Diese Aufgabe wird gelöst mit den Merkmalen der unabhängigen Ansprüche. Vorteilhafte Ausgestaltungen sind Gegenstand der Unteransprüche.

Erfindungsgemäß ist ein zentraler Server (Rechner) und eine Vielzahl von im Verfahren mitwirkender LKWs vorgesehen, welche über eine drahtlose, bidirektionale Kommunikationseinrichtung mit einem Servermodul und jeweils in einem LKW mitgeführten LKW-Modul verbunden sind. Gegebenenfalls können auch mehrere über das Land verteilte Server eingesetzt werden, die als Einzelgeräte und/oder als Netzwerk funktionieren.

Im zentralen Server sind Positionsdaten sowie Informationen zur Kapazität von LKW-Parkplätzen abgelegt und/oder es werden diese Informationen aus den von den LKWs übermittelten Daten generiert.

In einem abgestellten LKW werden dessen Positionsdaten, beispielsweise als GPS-Daten erfasst und an den Server übermittelt, so dass dieser die genaue Abstellposition des aktuell abgestellten LKWs erkennt. Die Erfassung und Übermittlung von Positionsdaten der Abstellposition kann insbesondere zu Beginn einer Fahrtunterbrechung erfolgen, zum Beispiel dann, wenn ein digitaler Tachograph auf Ruhemodus umgeschaltet wird. Die Daten (zum Beispiel GPS-Daten, Lenkzeitinformationen, Tourdaten, usw.) können gegebenenfalls auch kontinuierlich an den Server gesendet werden.

Der Server kann solche Positionsdaten anderer LKWs einem bestimmten LKW-Parkplatz zuordnen und insbesondere durch eine Analyse vom Abstellabständen die Anzahl von dort abgestellten verfahrensrelevanten LKWs, entsprechend der besetzten Abstellplätze auf dem Parkplatz ermitteln. Durch einen Vergleich mit den Serverdaten zur Kapazität kann eine Wahrscheinlichkeit für gegebenenfalls freie Abstellplätze errechnet werden. Eine völlig sichere Angabe zur Anzahl freier Abstellplätze kann das Verfahren systembedingt in der Regel nicht liefern, da nicht davon auszugehen ist, dass alle LKWs mit verfahrensrelevanten LKW-Modulen ausgerüstet sind. Somit können einerseits möglicherweise mehr LKWs auf einem Parkplatz abgestellt sein als durch die Datenauswertung vom Server festgestellt wurde. Wenn auch die Kapazität des Parkplatzes durch Auswertung solcher Daten ermittelt wird (wie weiter unten detailliert erläutert), ist die vom Server erkannte Kapazität andererseits dadurch möglicherweise kleiner als die tatsächliche Kapazität des Parkplatzes. Die Auswertung der Positionsdaten der Abstellpositionen ergibt somit im Ergebnis eine mehr oder weniger hohe Wahrscheinlichkeit für einen oder mehrere freie Abstellplätze eines Parkplatzes. Der Server teilt dann diese Informationen über die Wahrscheinlichkeit freier Abstellplätze auf einem Parkplatz an Fahrer verfahrensrelevanter LKWs mit. Eine solche Mitteilung kann je nach der Ausgestaltung einer geeigneten Anzeige von einem Fahrer willkürlich, insbesondere für einen in näherer Umgebung liegenden Parkplatz aufgerufen werden, oder ständig in einer digitalen Karte angezeigt werden.

Zudem werden bei der erfindungsgemäßen Verfahrensführung auch Lenkzeitinformationen, insbesondere Lenkzeiten, Ruhezeiten, Bereitschaftszeiten und Arbeitszeiten, berücksichtigt, um ein dynamisch vorrausschauendes Modell zu realisieren. Dazu werden von den abgestellten LKWs ein bevorstehendes Ende einer Ruhezeit umfassende Lenkzeitdaten an den Server gesendet, die zur Berechnung der Wahrscheinlichkeit für einen/mehrere freien Abstellplätze in einem bestimmten folgenden Zeitraum verwendet werden: Diese Wahrscheinlichkeit ist umso größer, je eher einer Ruhezeit für einen zur Zeit parkenden Fahrer endet und dieser demnächst voraussichtlich weiterfährt und den Abstellplatz freigibt. Auch dann ist diese Wahrscheinlichkeit umso größer, je mehr Fahrer mit bald endender Ruhezeit auf dem Parkplatz sind und demnächst voraussichtlich weiterfahren werden.

An Autobahnen wurden eine Vielzahl großer LKW-Parkplätze geschaffen, um den Fahrern die vorgeschriebenen Fahrtunterbrechungen und Ruhezeiten zu ermöglichen. Die Position und Kapazität (Anzahl der Abstellplätze) sind für solche Parkplätze regelmäßig bekannt und können als genaue Daten im Server gespeichert werden. Alternativ dazu und insbesondere für nicht genau in ihrer Lage und Kapazität bekannte Parkplätze kann der Server einen möglichen Parkplatz mit seiner Position und seiner wahrscheinlichen Kapazität durch Auswertung der übermittelten Daten erkennen. Dazu sollen dem Server zweckmäßig zusätzlich zu den Positionsdaten eines abgestellten LKWs auch die Daten zur aktuellen Richtung mitgeteilt werden. Damit der Server abschätzen kann, ob ein erkannter Parkplatz unter anderem auch für größere LKWs geeignet ist, können optional auch weitere Fahrzeuginformationen, insbesondere zur Größe und zum Gewicht des jeweiligen Fahrzeugs mitgeteilt werden. Um im Server die Genauigkeit der Angaben zu einem möglichen Parkplatz hinsichtlich dessen Position und Kapazität zu erhöhen, ist eine Auswertung von LKW-Daten einer Mehrzahl dort nacheinander und/oder gleichzeitig abgestellter LKWs über einen definiert vorgegebenen, längeren Zeitraum erforderlich. Wenn diese Auswertung in einem Selbstlerneffekt ständig weitergeführt wird, kann die Genauigkeit bis zur praktisch sicheren Aussagen zur Position und zur Kapazität eines Parkplatzes gesteigert werden.

Mit einer einfachen Maßnahme kann vom Server die Kapazität eines Parkplatzes durch eine wiederholt festgestellte, maximal gleichzeitig dort abgestellte Anzahl von LKWs ermittelt werden. Die genaue Kapazität kann dann ermittelt werden, wenn alle abgestellten und berücksichtigten LKWs mit den verfahrensrelevanten LKW-Modulen ausgerüstet sind - sonst ist die ermittelte Kapazität wahrscheinlich geringer als die tatsächliche.

Mit weiteren und/oder anderen Auswertungen und Modellen ist gegebenenfalls eine schnellere und belastbarerer Aussage zur Kapazität eines Parkplatzes zu erhalten, welcher vom Server durch eine Datenauswertung erkannt und klassifiziert wird:
Der Server kann anhand der empfangenen Daten die abgestellten LKWs als beliebige geometrische Figuren, beispielsweise als Rechtecke, modellieren und in einem Koordinatensystem darstellen. In einem weiteren Schritt können diese Modelle in Cluster mit einer bestimmten Fläche zusammengefasst werden. Diese Fläche wird als Fläche des Parkplatzes modelliert. Weiter kann der Server anhand der empfangenden Daten durch ein Mustererkennungsverfahren einen ermittelten Parkplatz beispielsweise in eine von drei Kategorien einordnen und die Kategorieeinordnung zur Kapazitätsbestimmung mit verwenden:

### 1. Längsparken am Straßenrand

Ein Kriterium dafür ist, dass erfasste LKWs hintereinander neben einer Straße auf einer demgegenüber schmalen Fläche parken. Die Kapazität eines solchen Parkplatzes entsprechend der Anzahl der verfügbaren Abstellplätze ist durch die ermittelte Länge des Parkplatzes geteilt durch die Länge eines angenommenen LKW-Modells zuzüglich Rangierabstand gegeben.

### 2. Strukturiertes Parken auf einem Parkplatz einer Raststätte oder einem Betriebshof

Für eine solche Situation wird vom Server erkannt, dass die LKWs hier alle entsprechend der Datenauswertung in eine etwa gleiche oder entgegengesetzte Richtung parken. Für eine Abschätzung der Kapazität eines solchen Parkplatz entsprechend der Anzahl der verfügbaren Abstellplätze wird unter Berücksichtigung der Richtungsinformation abgeschätzt, wie oft ein normierter LKW in eine ermittelte Parkplatzfläche passt.

### 3. Unstrukturiertes Parken auf einer freien Fläche

In diesem Fall parken die LKWs willkürlich auf einer freien Fläche, so dass die Kapazität und damit die Anzahl der möglichen Stellplätze nur relativ grob vom Server abgeschätzt werden kann. Eine grobe Abschätzung der Kapazität eines solchen Parkplatzes kann durch eine wiederholt festgestellte maximal gleichzeitig abgestellte Anzahl von LKWs durchgeführt werden.

Gegebenenfalls können weitere Kategorisierungen durchgeführt werden.

Zusammenfassend ist festzustellen, dass ein wesentliches Kriterium für die erfindungsgemäße Feststellung eines freien Abstellplatzes auf einem Parkplatz eine möglichst genaue Information über die Kapazität eines solchen Parkplatzes am Server für einen Vergleich mit mitgeteilten belegten Abstellplätzen ist. Mit den vorstehend erläuterten Maßnahmen und Auswertungen kann mit relativ hoher Wahrscheinlichkeit die Kapazität eines Parkplatzes am Server festgestellt werden.

Für eine Information über einen/mehrere freie Abstellplätze auf Parkplätzen an Parkplatz suchende Fahrer können mehrere unterschiedliche an den Server übermittelte Daten ausgewertet werden:
In einer relativ einfachen statischen Betrachtung vergleicht der Server die Anzahl der an ihn übermittelten, zur Zeit besetzten Abstellplätze mit der Kapazität des Parkplatzes. Je größer der Unterschied ist, umso größer ist die Wahrscheinlichkeit für einen freien Abstellplatz. Diese Information wird an LKW-Fahrer in der Umgebung, insbesondere an Parkplatz suchende Fahrer mitgeteilt.

Weiter wird zur Abschätzung der Wahrscheinlichkeit für einen freien Abstellplatz alternativ oder zusätzlich die Veränderungsrate der Abstellplätze für einen bestimmten Zeitraum berücksichtigt, wobei eine größere Veränderungsrate zu freien Abstellplätzen deren Vorhandensein wahrscheinlicher macht.

Zudem kann der Server gespeicherte Daten, insbesondere Wahrscheinlichkeitsdaten zu freien Abstellplätzen bezüglich Tageszeiten und/oder Wochentagen analysiert und berücksichtigt: wenn es beispielsweise Zeiten gibt, in denen die durchschnittlichen Ruhepausen die vorgeschriebenen Ruhepausen nur wenig überschreiten, so steigt die Wahrscheinlichkeit, dass bei abgelaufener vorgeschriebener Ruhezeit der Parkplatz freigeben wird.

Zudem können dem Server von den LKWs auch Fahrdaten übermittelt werden, aus denen erfolgreiche und nicht erfolgreiche Parkversuche auf einem Parkplatz analysiert werden, wobei die Wahrscheinlichkeit für einen freien Abstellplatz umso größer ist, je mehr erfolgreiche Parkversuche registriert werden.

Aus den von LKWs an den Server übermittelten Daten kann festgestellt werden, ob sich vor dem parkplatzsuchenden LKW weitere LKWs befinden, die ebenfalls nach einem Parkplatz suchen - insbesondere erkennbar aus einer bald endenden Lenkzeit - wodurch die Wahrscheinlichkeit für einen freien Parkplatz sinkt.

Weiter kann zur Erkennung eines freien Abstellplatzes im unmittelbaren Umfeld eines abgestellten LKWs eine fahrzeugseitige Sensorik, insbesondere eine Radar-, Video-, Laserscanner-Sensorik genutzt werden. Eine Information über einen so erkannten freien Abstellplatz kann an den Server gesendet werden und von dort an andere LKWs mitgeteilt werden bzw. bei den vorstehend geschilderten Wahrscheinlichkeitsberechnungen für einen freien Abstellplatz mitberücksichtigt werden. Einzelne ermittelte Wahrscheinlichkeiten sollen durch eine geeignete Methode (Rechenoperation) zu einer gesamten Wahrscheinlichkeit zusammengefasst werden.

Die Mitteilung vom Server über einen (wahrscheinlich) freien Abstellplatz auf einem Parkplatz kann einem Fahrer eines LKW visuell und/oder akustisch durch geeignete, allgemein bekannte Einrichtungen vermittelt werden. Ab einer vom Server festgestellten Wahrscheinlichkeit kann eine solche Mitteilung als Empfehlung für einen Parkplatz erfolgen, wobei gegebenenfalls die Größe der aus mehreren vorstehenden Wahrscheinlichkeitsbetrachtungen ermittelten Gesamtwahrscheinlichkeit einem Fahrer zusätzlich übermittelt werden kann.

Konkret wird dazu vorgeschlagen, dass ein Parkplatz mit Informationen zur Kapazität der Abstellplätze und/oder zur Wahrscheinlichkeit eines freien Abstellplatzes vorteilhaft in einer Navigationskarte auf einem Display im intuitiven Sichtbereich eines Fahrers dargestellt wird. Die Größe der Wahrscheinlichkeit bei der Bestimmung der Kapazität eines Parkplatzes und/oder die Größe der Wahrscheinlichkeit bei der Information über einen/mehrere freie Abstellplätze kann visuell durch unterschiedliche Größenangaben und/oder durch unterschiedliche Farben und/oder durch unterschiedliche Schraffuren/Strichstärken und/oder durch unterschiedliche Helligkeiten wiedergegeben werden. Zweckmäßig werden dabei visuell auffallendere Darstellungen größeren Wahrscheinlichkeiten und visuell schwächere Darstellungen kleineren Wahrscheinlichkeiten zugeordnet. Um die Erkennung noch mehr Robustheit zu verleihen, soll der Server das Ergebnis der Erkennung mit den Informationen der digitalen Karte, auf der auch Infrastrukturinformationen gespeichert sein sollen, vergleichen, um sicherzustellen, dass es sich um Abstellplätze auf einem öffentlich zugänglichen Parkplatz und nicht zum Beispiel auf einem privaten Betriebshof handelt.

Die Zuverlässigkeit des Verfahrens steigt mit der gesammelten, dem Server zur Verfügung gestellten Datenmenge. Der Server soll die Funktionalität besitzen, alte erkannte Daten mit neuen Daten zu fusionieren, um die Zuverlässigkeit zu steigern.

Zudem soll der Server in der Lage sein, einem parkplatzsuchenden LKW anhand der empfangenen Daten und/oder berechneten Wahrscheinlichkeiten einen Parkplatz, gegebenenfalls mit einer optimalen Route dahin, als Ziel vorzuschlagen, wobei bevorzugt vorgesehen ist, dass sich der vorgeschlagene Parkplatz unter Berücksichtigung der Restlenkzeit in der Reichweite des parkplatzsuchenden LKWs befindet und/oder dass der vorgeschlagene Parkplatz bezüglich der Parkplatzwahrscheinlichkeit und der Restlenkzeit der optimalste Parkplatz ist.

Anhand einer Zeichnung wird die Erfindung weiter erläutert.

Es zeigen:
- Fig. 1: eine schematische Draufsicht auf die Komponenten einer Vorrichtung für eine Parkplatzsuche,
- Fig. 2: eine Modellierung von LKWs als Rechtecke durch einen Server,
- Fig. 3: eine Zusammenfassung in Cluster der Modelle nach Fig. 2,
- Fig. 4: eine schematische Darstellung eines strukturierten Parkens auf einem RaststätteParkplatz,
- Fig. 5: zwei Kapazitäts-Darstellungen unterschiedlicher Zuverlässigkeit in einer digitalisierten Straßenkarte, und
- Fig. 6: zwei Darstellungen über einen freien Abstellplatz mit unterschiedlichen Wahrscheinlichkeiten.

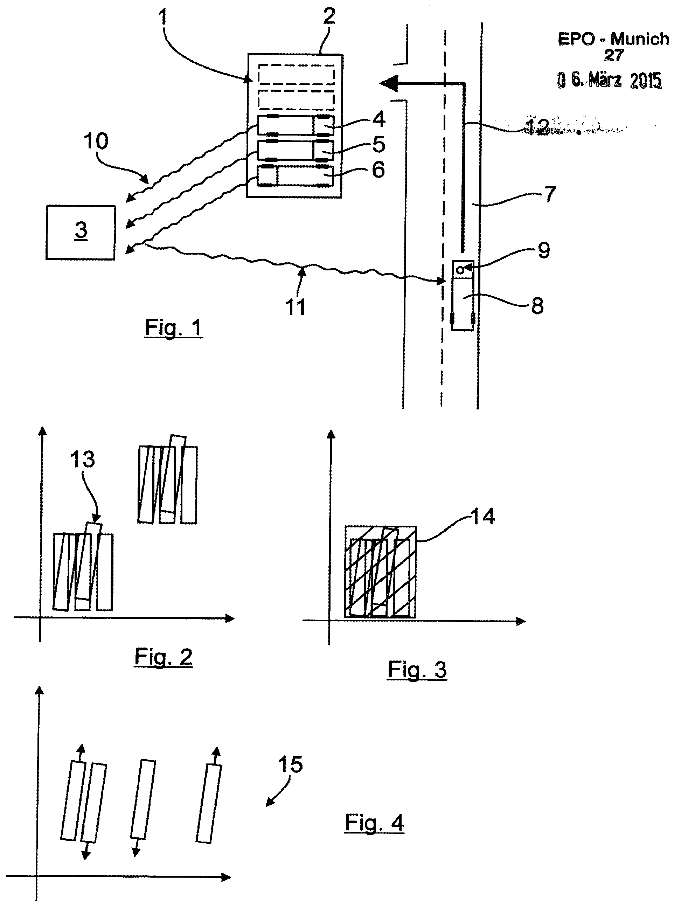

In Fig. 1 sind die Komponenten einer Vorrichtung zur Ermittlung freier Abstellplätze 1 auf einem LKW-Parkplatz 2 dargestellt. Eine wesentliche Komponente ist ein Server 3 als Rechner mit einem Server-Modul einer drahtlosen, bidirektionalen Kommunikationseinrichtung. Weitere Komponenten sind auf dem LKW-Parkplatz 2 bereits abstellte LKWs 4, 5, 6 sowie ein auf einer Straße 7 fahrender LKW 8 mit einem Parkplatz suchenden Fahrer 9.

Alle LKWs 4, 5, 6, 8 sind mit einem (nicht dargestellten) GPS-Gerät zur Ermittlung von Positionsdaten und Richtungsdaten ausgerüstet. Weiter sind die LKWs 4, 5, 6, 8 mit einem Gerät zur Erfassung und Auswertung von Lenkzeiten, insbesondere zur Bestimmung zulässiger Lenkzeiten ausgerüstet. Die damit erhaltenen Daten werden von allen LKWs 4, 5, 6, 8 zusammen mit Daten zu den jeweiligen Größen und Gewichten der LKWs jeweils mittels eines LKW-Moduls in einer drahtlosen Kommunikation an den Server 3 übermittelt.

Schematisch und beispielhaft ist eine Übersendung solcher Daten (Pfeile 10) beim Abstellen der LKWs 4, 5, 6 an den Server 3 dargestellt. Der Server 3 wertet die Daten aus und erkennt durch Vergleich mit der im Server bekannten Kapazität des Parkplatzes 2, dass dort noch zwei Parkplätze 1 frei sind. Diese Information gibt der Server 3 (Pfeil 11) per Mobilfunk an den Parkplatz suchenden Fahrer 9 des LKWs 8 weiter, welcher dann zum Parkplatz 2 fahren kann (Fahr-Pfeil 12).

Der Server 3 benötigt eine Information über die Gesamtzahl der Abstellplätze (5 Abstellplätze in Fig. 1) entsprechend der Kapazität des Parkplatzes 2. Wenn die drei LKWs 4, 5, 6 dem Server 3 mitteilen (Pfeile 10), dass sie auf den Parkplatz 2 bereits abgestellt sind, kann der Server 3 durch Differenzbildung erkennen, dass noch zwei Abstellplätze vorliegen und dies dem Fahrer 9 im LKW 8 mitteilen (Pfeil 11). Das Ergebnis dieser Auswertung kann jedoch möglicherweise dann nicht genau zutreffen, wenn ein nicht am Verfahren teilnehmender LKW ebenfalls auf dem Parkplatz 2 abgestellt ist und diesen der Server 3 nicht erfasst. Insofern ist das dem Fahrer 9 übermittelte Ergebnis nur mit einer gegebenenfalls situations- und zeitabhängigen mehr oder minder hohen Wahrscheinlichkeit zutreffend.

Die Kapazität eines Parkplatzes kann entweder als bekannte Größe im Server 3 gespeichert werden, oder vom Server 3 über eine längere Zeit hinweg selbst ermittelt werden. In den Fig. 2, 3 und 4 sind dazu schematisch mögliche Verfahrensschritte gezeigt:
Der Server kann anhand der empfangenen Daten die abgestellten LKWs gemäß Fig. 2 als Rechtecke 13 modellieren und in einem Koordinatensystem darstellen. In einem weiteren Schritt werden durch ein geeignetes Clusterverfahren gemäß Fig. 3 diese Modelle in Cluster zusammengefasst, wobei die Größe der Fläche (schraffierte Fläche 14) bestimmt wird, zum Beispiel indem das Flächenintegral gebildet wird.

In Fig. 4 sind vier auf einem Raststättenparkplatz abgestellte LKW 15 im Modell dargestellt, bei denen der Server durch die Übermittlung von Richtungsdaten erkennt, dass jeweils zwei davon etwa in gleicher paralleler Richtung und zwei davon entgegengesetzt parken. Diese Information wird bei der Auswertung zur Kapazitätsbestimmung für ein strukturiertes Parken mit verwendet.

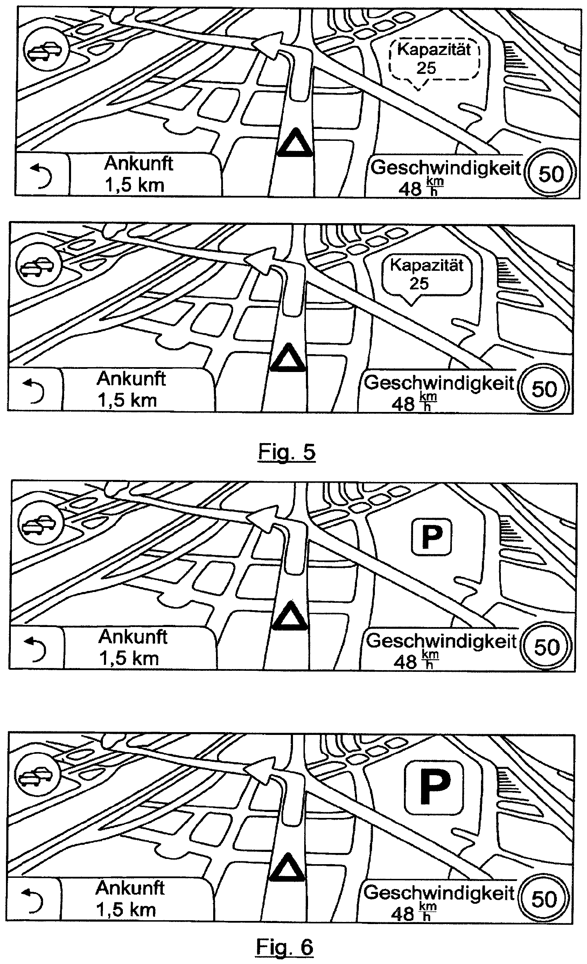

Eine wichtige Information für den Fahrer 9 kann unter anderem sein, wie viele Abstellplätze ein Parkplatz hat. Diese Information kann vom Server 3 zur Verfügung gestellt und/oder individuell vom Fahrer 9 abgerufen und gemäß Fig. 5 in einer digitalen Straßenkarte am Ort des Parkplatzes angezeigt werden. Der visuelle Eindruck dazu kann je nach der Zuverlässigkeit einer solchen Information unterschiedlich, beispielsweise durch einen Farbcode oder durch Strichstärkenunterschiede gestaltet sein. In Fig. 5a ist beispielsweise eine Information über eine Kapazität von 25 Abstellplätzen mit relativ geringer Aussagesicherheit dargestellt, so dass hier die entsprechende Umrahmung strichliert gezeigt ist. In Fig. 5b ist dagegen die gleiche Angabe "Kapazität 25" mit einer zusammenhängenden Umrahmung großer Strichstärke als relativ sichere Information dargestellt.

Vom Server 3 erhält der Fahrer 9 zudem die Information, ob ein freier Abstellplatz auf dem in der digitalen Straßenkarte angegebenen Parkplatz vorliegt. Auch dazu kann die Größe der Wahrscheinlichkeit für diese Information visuell durch einen Farbcode, Umrandungen, etc. gezeigt werden. In Fig. 6 ist eine solche Visualisierung unterschiedlicher großer Wahrscheinlichkeit durch eine Größenvariation der Parkplatzbezeichnung ausgeführt. In Fig. 6a ist der Parkplatz mit einem relativ kleinen Parkplatzzeichen angegeben. Dies soll hier bedeuten, dass dort zwar voraussichtlich, jedoch mit einer nicht zu großen Wahrscheinlichkeit ein freier Abstellplatz vorhanden ist. In Fig. 6b ist dagegen die Bezeichnung des Parkplatzes wesentlich größer, was hier bedeuten soll, dass mit großer Wahrscheinlichkeit ein freier Abstellplatz vorgefunden wird.

### Bezugszeichenliste

- 1: freier Abstellplatz
- 2: LKW-Parkplatz
- 3: Server
- 4: LKW (abgestellt)
- 5: LKW (abgestellt)
- 6: LKW (abgestellt)
- 7: Straße
- 8: LKW (fahrend)
- 9: Fahrer
- 10: Pfeile
- 11: Pfeil
- 12: Fahr-Pfeil
- 13: Rechtecke
- 14: Fläche
- 15: LKWs

## Patentansprüche

1. Verfahren zur Ermittlung freier Abstellplätze auf LKW-Parkplätzen und Mitteilung an LKW-Fahrer, umfassend wenigstens einen zentralen Server (3) und eine Vielzahl von im Verfahren mitwirkender LKWs (4, 5, 6, 8), welche über eine drahtlose, bidirektionale KommunikationsEinrichtung mittels eines Server-Moduls und jeweils in einem LKW (4, 5, 6, 8) mitgeführten LKW-Moduls verbunden sind, wobei
im zentralen Server (3) Positionsdaten sowie Informationen zur Kapazität von LKW-Parkplätzen (2) abgelegt sind und/oder generiert werden,
jeweils in einem abgestellten LKW (4, 5, 6) Positionsdaten der Abstellposition erfasst und an den Server (3) übermittelt werden,
der Server (3) aus solchen Positionsdaten mehrerer LKWs (4, 5, 6) die Anzahl von abgestellten, im Verfahren mitwirkenden LKWs (4, 5, 6) entsprechend besetzten Abstellplätzen auf einem bestimmten LKW-Parkplatz (2) ermittelt und durch einen Vergleich mit den Serverdaten zur Kapazität eine Wahrscheinlichkeit gegebenenfalls freier Abstellplätze (1) feststellt,
der Server (3) Informationen über die Wahrscheinlichkeit freier Abstellplätze auf diesem LKW-Parkplatz (2) an Fahrer (9) von im Verfahren mitwirkenden LKWs (8) mitteilt,
dass von den abgestellten LKWs (4, 5, 6) ein bevorstehendes Ende einer Ruhezeit umfassende Lenkzeitinformationen an den Server (3) gesendet werden, die zur Berechnung der Wahrscheinlichkeit für einen/mehrere freie Abstellplätze (1) in einem bestimmten folgenden Zeitraum verwendet werden, und
wobei diese Wahrscheinlichkeit umso größer ist, je eher eine Ruhezeit für einen zur Zeit parkenden Fahrer endet und dieser demnächst voraussichtlich weiterfährt und den Abstellplatz freigibt und/oder wobei diese Wahrscheinlichkeit umso größer ist, je mehr Fahrer mit bald endender Ruhezeit auf dem Parkplatz sind und demnächst weiterfahren werden.

2. Verfahren nach Anspruch 1, **dadurch gekennzeichnet,**
**dass** vom Server (3) ein möglicher LKW-Parkplatz (2) mit seiner Position und seiner wahrscheinlichen Kapazität dadurch ermittelt wird,
**dass** über einen definiert vorgegebenen Zeitraum übermittelte LKW-Daten abgestellter LKWs (4, 5, 6) zu deren Position und/oder ihrer Richtung und/oder Größe und/oder Gewicht und/oder Parkzeiten ausgewertet werden.

3. Verfahren nach Anspruch 2, **dadurch gekennzeichnet, dass** vom Server die Kapazität des Parkplatzes (2) durch eine wiederholt festgestellte maximal gleichzeitig dort abgestellte Anzahl von LKWs ermittelt wird.

4. Verfahren nach Anspruch 2, **dadurch gekennzeichnet, dass** der Server (3) anhand der empfangenen Daten die abgestellten LKWs modelliert, insbesondere als Rechtecke modelliert, und sie in einem Koordinatensystem darstellt, wobei bevorzugt vorgesehen ist, dass der Server (3) die Modelle in einem weiteren Schritt in Cluster mit einer bestimmten Fläche (14) zusammenfasst.

5. Verfahren nach einem der Ansprüche 1 bis 4, **dadurch gekennzeichnet, dass** der Server (3) anhand der empfangenen Daten durch ein Mustererkennungsverfahren einen ermittelten Parkplatz in eine Kategorie einordnet und die Kategorieeinordnung zur Kapazitätsabschätzung mit verwendet, wobei zumindest folgende Kategorien vorgesehen sind:
1. Längsparken am Straßenrand, wobei hier erfasste LKWs hintereinander neben einer Straße auf einer demgegenüber schmalen Fläche parken und die Kapazität des Parkplatzes entsprechend der Anzahl der verfügbaren Abstellplätze durch die Länge des Parkplatzes geteilt durch die Länge eines angenommenen LKW-Modells abgeschätzt wird,
2. Strukturiertes Parken auf einem Parkplatz einer Raststätte oder auf Betriebshöfen, wobei in dieser Situation die LKWs (15) alle in eine etwa gleiche oder entgegengesetzte Richtung parken (Fig. 4), wobei für die Kapazität des Parkplatzes entsprechend der Anzahl der verfügbaren Abstellplätze unter Berücksichtigung der Richtungsinformation abgeschätzt wird wie oft ein LKW mit Normgröße in eine ermittelte Parkplatzfläche passt,
3. Unstrukturiertes Parken auf einer freien Fläche, wobei für eine grobe Abschätzung der Kapazität des Parkplatzes eine wiederholt festgestellte, maximal gleichzeitig abgestellte Anzahl von LKWs, verwendet wird.

6. Verfahren nach einem der Ansprüche 1 bis 5, **dadurch gekennzeichnet, dass** der Server (3) die Anzahl der an ihn übermittelten, zur Zeit besetzten Abstellplätze mit der Kapazität des Parkplatzes (2) vergleicht und je größer der Unterschied ist eine umso größere Wahrscheinlichkeit für einen freien Abstellplatz an Fahrer, insbesondere an Parkplatz suchende Fahrer (9), mitteilt.

7. Verfahren nach einem der Ansprüche 1 bis 6, **dadurch gekennzeichnet,**
**dass** zur Abschätzung der Wahrscheinlichkeit für einen freien Abstellplatz zusätzlich die Veränderungsrate der Abstellplätze für einen bestimmten Zeitraum berücksichtigt wird, wobei eine größere Veränderungsrate zu freien Abstellplätzen deren Vorhandensein wahrscheinlicher macht, und/oder
**dass** der Server gespeicherte Daten, insbesondere Wahrscheinlichkeitsdaten bezüglich Tageszeiten und/oder Wochentagen, analysiert und berücksichtigt, und/oder
**dass** dem Server von den LKWs (8) auch Fahrdaten übermittelt werden und erfolgreiche und nicht erfolgreiche Parkversuche auf dem Parkplatz analysiert werden, wobei die Wahrscheinlichkeit eines freien Abstellplatzes umso größer ist, je mehr erfolgreiche Parkversuche registriert werden.

8. Verfahren nach einem der Ansprüche 1 bis 7, **dadurch gekennzeichnet, dass** zur Abschätzung der Wahrscheinlichkeit für einen freien Abstellplatz zusätzlich von anderen LKWs an den Server gesendete Lenkzeit- und Positionsdaten dahingehend analysiert und berücksichtigt werden, ob sich vor dem aktuellen parkplatzsuchenden LKW weitere LKWs befinden, deren Lenkzeiten bald enden und die daher wahrscheinlich auch bereits oder bald einen Parkplatz suchen, so dass für den aktuellen LKW dadurch die Wahrscheinlichkeit für einen freien Parkplatz reduziert wird.

9. Verfahren nach einem der Ansprüche 1 bis 8, **dadurch gekennzeichnet, dass** zur Erkennung eines freien Abstellplatzes im Umfeld eines abgestellten LKW's eine fahrzeugseitige Sensorik, insbesondere eine Radar- und/oder Video- und/oder Ultraschall- und/oder Laserscanner-Sensorik, genutzt wird und eine entsprechende Information an den Server (3) gesendet und von dort an andere LKWs (8) mitgeteilt wird.

10. Verfahren nach einem der Ansprüche 1 bis 9, **dadurch gekennzeichnet, dass** ein Parkplatz mit Informationen zur Kapazität der Abstellplätze und/oder zur Wahrscheinlichkeit eines freien Abstellplatzes in einer Navigationskarte auf einem Display im intuitiven Sichtbereich eines Fahrers dargestellt wird, wobei bevorzugt vorgesehen ist, dass die Größe der Wahrscheinlichkeit bei der Bestimmung der Kapazität eines Parkplatzes und/oder die Größe der Wahrscheinlichkeit bei der Information über einen/mehrere freie Abstellplätze visuell durch unterschiedliche Größenangaben und/oder durch unterschiedliche Farben und/oder unterschiedliche Schraffuren/Strichstärken und/oder durch unterschiedliche Helligkeiten wiedergegeben wird.

11. Verfahren nach einem der Ansprüche 1 bis 10, **dadurch gekennzeichnet, dass** der Server einem parkplatzsuchenden LKW anhand der empfangenen Daten und/oder berechneten Wahrscheinlichkeiten einen Parkplatz, vorzugsweise mit einer optimalen Route dahin, als Ziel vorschlägt, wobei bevorzugt vorgesehen ist, dass sich der vorgeschlagene Parkplatz unter Berücksichtigung der Restlenkzeit in der Reichweite des parkplatzsuchenden LKWs befindet und/oder dass der vorgeschlagene Parkplatz bezüglich der Parkwahrscheinlichkeit und der Restlenkzeit der optimalste Parkplatz ist.

12. Zentraler Server (3) zur Ermittlung freier Abstellplätze auf LKW-Parkplätzen und Mitteilung an LKW-Fahrer, wobei der zentrale Server (3) und eine Vielzahl von im Verfahren mitwirkender LKWs (4, 5, 6, 8) über eine drahtlose, bidirektionale Kommunikationseinrichtung mittels eines Server-Moduls und jeweils in einem LKW (4, 5, 6, 8) mitgeführten LKW-Moduls verbunden sind, und wobei der zentrale Server zur Durchführung eines Verfahrens nach einem der vorhergehenden Ansprüche ausgeführt ist.

13. LKW (4, 5, 6, 8), welcher über eine drahtlose, bidirektionale Kommunikationseinrichtung mittels eines in dem LKW (4, 5, 6, 8) mitgeführten LKW-Moduls und eines Server-Moduls mit wenigstens einem zentralen Server (3) verbunden ist, wobei der LKW (4, 5, 6, 8) zur Durchführung eines Verfahrens nach einem der Ansprüche 1 bis 11 ausgeführt ist.

## Claims

1. Method for determining available parking spaces in HGV parking areas and for notifying HGV drivers,
comprising at least one central server (3) and a multiplicity of HGVs (4, 5, 6, 8) which cooperate in the method and are connected via a wireless bidirectional communication device by means of a server module and a HGV module carried in each HGV (4, 5, 6, 8), wherein
position data and information relating to the capacity of HGV parking areas (2) are stored and/or generated in the central server (3),
position data relating to the parking position are respectively captured in a parked HGV (4, 5, 6) and are transmitted to the server (3),
the server (3) uses such position data relating to a plurality of HGVs (4, 5, 6) to determine the number of parked HGVs (4, 5, 6) cooperating in the method in accordance with occupied parking spaces in a particular HGV parking area (2) and determines a probability of possibly available parking spaces (1) by means of a comparison with the server data relating to the capacity,
the server (3) communicates information relating to the probability of available parking spaces in this HGV parking area (2) to drivers (9) of HGVs (8) cooperating in the method,
driving time information comprising an imminent end of a rest time is transmitted from the parked HGVs (4, 5, 6) to the server (3), which driving time information is used to calculate the probability of one or more available parking spaces (1) in a particular subsequent period, and
wherein this probability is greater, the sooner a rest time for a currently parked driver ends and the latter probably soon drives on and vacates the parking space, and/or wherein this probability is greater, the more drivers with a rest time ending soon there are in the parking area and will soon drive on.

2. Method according to Claim 1, **characterized**
**in that** a possible HGV parking area (2), with its position and its probable capacity, is determined by the server (3) by
evaluating HGV data relating to parked HGVs (4, 5, 6), transmitted over a defined predetermined period, with respect to their position and/or their direction and/or size and/or weight and/or parking times.

3. Method according to Claim 2, **characterized in that** the capacity of the parking area (2) is determined by the server by means of a repeatedly determined maximum number of HGVs which are parked there at the same time.

4. Method according to Claim 2, **characterized in that** the server (3) models the parked HGVs, in particular models them as rectangles, on the basis of the received data and represents them in a coordinate system, wherein provision is preferably made for the server (3) to combine the models in clusters with a particular area (14) in a further step.

5. Method according to one of Claims 1 to 4, **characterized in that** the server (3) classifies a determined parking area in a category by means of a pattern recognition method on the basis of the received data and concomitantly uses the category classification to estimate the capacity, wherein at least the following categories are provided:
1. Parallel parking at the edge of the road, wherein HGVs captured here park behind one another beside a road in an area which is narrow in comparison, and the capacity of the parking area is estimated according to the number of available parking spaces by means of the length of the parking area divided by the length of an assumed HGV model,
2. structured parking in a parking area of a rest area or in depots, wherein, in this situation, the HGVs (15) all park in an approximately identical or opposite direction (Figure 4), wherein, for the capacity of the parking area according to the number of available parking spaces, it is estimated how often a HGV of normal size fits into a determined parking area taking into account the direction information,
3. unstructured parking in a free area, wherein a repeatedly determined maximum number of HGVs parked at the same time is used to roughly estimate the capacity of the parking area.

6. Method according to one of Claims 1 to 5, **characterized in that** the server (3) compares the number of currently occupied parking spaces transmitted to it with the capacity of the parking area (2) and, the greater the difference, communicates a greater probability of an available parking space to drivers, in particular drivers (9) looking for a parking area.

7. Method according to one of Claims 1 to 6, **characterized**
**in that**, in order to estimate the probability of an available parking space, the change rate of the parking spaces is additionally taken into account for a particular period, wherein a greater change rate to available parking spaces makes their presence more probable, and/or
**in that** the server analyses and takes into account stored data, in particular probability data with respect to times of the day and/or days of the week, and/or
**in that** driving data are also transmitted to the server by the HGVs (8) and successful and unsuccessful parking attempts in the parking area are analysed, wherein the probability of an available parking space is greater, the greater the number of successful parking attempts registered.

8. Method according to one of Claims 1 to 7, **characterized in that**, in order to estimate the probability of an available parking space, driving time and position data transmitted to the server by other HGVs are additionally analysed and taken into account in order to determine whether there are further HGVs, whose driving times end soon and which are therefore probably also already searching or will soon search for a parking area, in front of the current HGV looking for a parking area, with the result that the probability of an available parking area is thereby reduced for the current HGV.

9. Method according to one of Claims 1 to 8, **characterized in that**, in order to detect an available parking space in the environment of a parked HGV, a vehicle sensor system, in particular a radar and/or video and/or ultrasonic and/or laser scanner sensor system, is used and a corresponding item of information is transmitted to the server (3) and is communicated to other HGVs (8) from there.

10. Method according to one of Claims 1 to 9, **characterized in that** a parking area with information relating to the capacity of the parking spaces and/or relating to the probability of an available parking space is presented in a navigation map on a display in the intuitive field of view of a driver, wherein provision is preferably made for the magnitude of the probability when determining the capacity of a parking area and/or the magnitude of the probability in the information relating to one or more available parking spaces to be visually represented by means of different size indications and/or by means of different colours and/or different hatching/line widths and/or by means of different brightnesses.

11. Method according to one of Claims 1 to 10, **characterized in that** the server suggests a parking area to a HGV looking for a parking area, preferably with an optimum route to said parking area, as a destination on the basis of the received data and/or calculated probabilities, wherein provision is preferably made for the suggested parking area to be within the range of the HGV looking for a parking area taking into account the remaining driving time and/or for the suggested parking area to be the most optimum parking area with respect to the parking probability and the remaining driving time.

12. Central server (3) for determining available parking spaces in HGV parking areas and for notifying HGV drivers, wherein the central server (3) and a multiplicity of HGVs (4, 5, 6, 8) cooperating in the method are connected via a wireless bidirectional communication device by means of a server module and a HGV module carried in each HGV (4, 5, 6, 8), and wherein the central server is configured to carry out a method according to one of the preceding claims.

13. HGV (4, 5, 6, 8) which is connected to at least one central server (3) via a wireless bidirectional communication device by means of a HGV module carried in the HGV (4, 5, 6, 8) and a server module, wherein the HGV (4, 5, 6, 8) is configured to carry out a method according to one of Claims 1 to 11.

## Revendications

1. Procédé destiné à déterminer des aires de stationnement libres dans des parcs de stationnement pour camions et à en informer des conducteurs de camions, comprenant
au moins un serveur central (3) et une pluralité de camions (4, 5, 6, 8) coopérant dans le procédé, qui sont reliés par l'intermédiaire d'un dispositif de communication bidirectionnel sans fil au moyen d'un module serveur et d'un module de camion respectivement embarqué dans un camion (4, 5, 6, 8), dans lequel
des données de position et des informations concernant la capacité de parcs de stationnement pour camions (2) sont stockées et/ou générées dans le serveur central (3),
des données de position de l'emplacement de stationnement sont respectivement détectées dans un camion stationné (4, 5, 6) et transmises au serveur (3),
le serveur (3) détermine à partir de ces données de position de plusieurs camions (4, 5, 6) le nombre de camions stationnés (4, 5, 6) qui participent au procédé, en fonction des aires de stationnement occupées dans un parc de stationnement pour camions (2) donné et calcule une probabilité de présence d'aires de stationnement éventuellement libres (1) au moyen d'une comparaison aux données du serveur concernant la capacité,
le serveur (3) transmet aux conducteurs (9) de camions (8) participant au procédé des informations concernant la probabilité de présence d'aires de stationnement libres dans ledit parc de stationnement pour camions (2),
en ce que des informations de temps de conduite comprenant une fin imminente d'une période de repos sont envoyées au serveur (3) par les camions stationnés (4, 5, 6), celles-ci étant utilisées pour calculer la probabilité de présence d'une/de plusieurs aire(s) de stationnement libre(s) (1) pendant une période donnée suivante, et
dans lequel ladite probabilité est d'autant plus grande qu'une période de repos se termine tôt pour un conducteur qui se gare actuellement et qu'il est susceptible de bientôt reprendre la route et de libérer l'aire de stationnement, et/ou dans lequel ladite probabilité est d'autant plus grande qu'un plus grand nombre de conducteurs dont la période de repos se termine sont présents dans le parc de stationnement et qu'ils vont bientôt reprendre la route.

2. Procédé selon la revendication 1, **caractérisé en ce que** le serveur (3) détermine un parc de stationnement pour camions (2) possible avec sa position et sa capacité probable en procédant à l'évaluation de données de camions concernant des camions stationnés (4, 5, 6) et transmises au cours d'une période de temps prédéterminée définie en ce qui concerne leur position et/ou leur direction et/ou leur taille et/ou leur poids et/ou leurs temps de stationnement.

3. Procédé selon la revendication 2, **caractérisé en ce que** la capacité du parc de stationnement (2) est déterminée par le serveur en déterminant de manière répétée un nombre maximum de camions qui y sont stationnés en même temps.

4. Procédé selon la revendication 2, **caractérisé en ce que** le serveur (3) modélise les camions stationnés sur la base des données reçues, et les modélise en particulier sous la forme de rectangles et les représente dans un système de coordonnées, dans lequel il est de préférence fait en sorte que, lors d'une autre étape, le serveur (3) combine les modèles en des groupements ayant une surface donnée (14).

5. Procédé selon l'une des revendications 1 à 4, **caractérisé en ce que** le serveur (3) classe un parc de stationnement déterminé dans une certaine catégorie sur la base des données reçues par un procédé de reconnaissance de formes et utilise le classement en catégories pour l'estimation de capacité, dans lequel il est au moins prévu les catégories suivantes :
1) un stationnement longitudinal en bordure de route, dans lequel les camions détectés stationnent dans ce cas les uns derrière les autres le long d'une route sur une aire étroite et la capacité du parc de stationnement est estimée en fonction du nombre d'aires de stationnement disponibles divisé par la longueur de l'emplacement de stationnement et par la longueur d'un modèle de camion pris pour hypothèse,
2) un stationnement structuré sur un parc de stationnement d'une aire de service ou dans des dépôts, dans lequel les camions (15) stationnent tous dans ce cas approximativement dans la même direction ou dans une direction opposée (Fig.4), dans lequel, pour la capacité du parc de stationnement, la fréquence avec laquelle un camion de taille standard s'insère dans une zone de stationnement déterminée est estimée en fonction du nombre d'aires de stationnement disponibles en tenant compte des informations de direction,
3) un stationnement non structuré sur une zone libre, dans lequel un nombre maximum de camions stationnés en même temps et déterminé de manière répétée est utilisé pour une estimation grossière de la capacité du parc de stationnement.

6. Procédé selon l'une des revendications 1 à 5, **caractérisé en ce que** le serveur (3) compare le nombre d'aires de stationnement actuellement occupées qui lui sont transmises à la capacité du parc de stationnement (2) et plus la différence est grande, plus la probabilité est élevée qu'une aire de stationnement libre soit présente, et communique celle-ci aux conducteurs, en particulier à des conducteurs (9) recherchant un parc de stationnement.

7. Procédé selon l'une des revendications 1 à 6, **caractérisé en ce que**, pour estimer la probabilité de présence d'une aire de stationnement libre, il est également tenu compte du taux de variation des aires de stationnement pendant une période de temps donnée, dans lequel un taux de variation plus élevé des aires de stationnement libres rend leur présence plus probable, et/ou
**en ce que** le serveur analyse et prend en compte des données stockées, en particulier des données de probabilité relatives aux heures de la journée et/ou aux jours de la semaine, et/ou
**en ce que** des données de conduite sont également transmises au serveur par les camions (8) et des tentatives de stationnement réussies ou non dans le parc de stationnement sont analysées, dans lequel la probabilité de présence d'une aire de stationnement libre est d'autant plus grande que le nombre de tentatives de stationnement réussies est élevé.

8. Procédé selon l'une des revendications 1 à 7, **caractérisé en ce que**, pour estimer la probabilité de présence d'une aire de stationnement libre, des données de temps de conduite et de position transmises au serveur par d'autres camions sont également analysées et prises en compte afin de déterminer si d'autres camions recherchant actuellement un parc de stationnement, dont les temps de conduite sont sur le point de se terminer et qui recherchent donc déjà probablement un parc de stationnement ou vont bientôt le faire, se trouvent en avance sur ledit camion, de sorte que la probabilité de présence d'un parc de stationnement libre est réduite pour le camion actuel.

9. Procédé selon l'une des revendications 1 à 8, **caractérisé en ce qu'**un système de capteurs côté véhicule, en particulier un système de capteurs radar et/ou vidéo et/ou à ultrasons et/ou à balayage laser, est utilisé pour la détection d'une aire de stationnement libre dans l'environnement d'un camion stationné et **en ce qu'**une information correspondante est transmise au serveur (3) et de là à d'autres camions (8).

10. Procédé selon l'une des revendications 1 à 9, **caractérisé en ce qu'**un parc de stationnement est représenté sur une carte de navigation sur un afficheur dans le champ de vision intuitif d'un conducteur, avec des informations concernant la capacité des aires de stationnement et/ou la probabilité de présence d'une aire de stationnement libre, dans lequel il est de préférence fait en sorte que la valeur de la probabilité obtenue lors de la détermination de la capacité d'un parc de stationnement et/ou que la valeur de la probabilité de l'information concernant une ou plusieurs aires de stationnement libre(s) soit/soient restituée(s) visuellement par différentes indications de grandeur et/ou par différentes couleurs et/ou par différentes largeurs de hachures/traits et/ou par différents niveaux de luminosité.

11. Procédé selon l'une des revendications 1 à 10, **caractérisé en ce que** le serveur propose un parc de stationnement, de préférence avec un itinéraire optimal, en tant que destination à un camion recherchant un parc de stationnement sur la base des données reçues et/ou de probabilités calculées, dans lequel il est de préférence fait en sorte que le parc de stationnement proposé se situe à portée du camion recherchant un parc de stationnement, compte tenu du temps de conduite restant, et/ou que le parc de stationnement proposé soit le plus optimal en ce qui concerne la probabilité de présence de l'emplacement de stationnement et le temps de conduite restant.

12. Serveur central (3) destiné déterminer des aires de stationnement libres dans des parcs de stationnement pour camions et à en informer des conducteurs de camions, dans lequel le serveur central (3) et une pluralité de camions (4, 5, 6, 8) coopérant dans le procédé sont reliés par l'intermédiaire d'un dispositif de communication bidirectionnel sans fil au moyen d'un module serveur et d'un module de camion respectivement embarqué dans un camion (4, 5, 6, 8), et dans lequel le serveur central est conçu pour la mise en oeuvre d'un procédé selon l'une des revendications précédentes.

13. Camion (4, 5, 6, 8) qui est relié à au moins un serveur central (3) par l'intermédiaire d'un dispositif de communication bidirectionnel sans fil au moyen d'un module de camion embarqué dans le camion (4, 5, 6, 8) et d'un module serveur, dans lequel le camion (4, 5, 6, 8) est conçu pour la mise en oeuvre d'un procédé selon l'une des revendications 1 à 11.
